Europäisches Patentamt

European Patent Office

Office européen des brevets

(19)

(11) Numéro de publication : **0 521 750 A1**

(12) # DEMANDE DE BREVET EUROPEEN

(21) Numéro de dépôt : **92401706.4**

(22) Date de dépôt : **18.06.92**

(51) Int. Cl.$^5$ : **G01S 13/78**

(30) Priorité : **05.07.91 FR 9108455**

(43) Date de publication de la demande :
**07.01.93 Bulletin 93/01**

(84) Etats contractants désignés :
**AT BE CH DE DK ES FR GB GR IT LI PT SE**

(71) Demandeur : **THOMSON-CSF**
**51, Esplanade du Général de Gaulle**
**F-92800 Puteaux (FR)**

(72) Inventeur : **Chaumette, Eric**
**THOMSON-CSF, SCPI, Cédex 67**
**F-92045 Paris la Défense (FR)**
Inventeur : **Desodt, Guy**
**THOMSON-CSF, SCPI, Cédex 67**
**F-92045 Paris la Défense (FR)**
Inventeur : **Muller, Daniel**
**THOMSON-CSF, SCPI, Cédex 67**
**F-92045 Paris la Défense (FR)**

(74) Mandataire : **Benoit, Monique et al**
**THOMSON-CSF SCPI B.P. 329**
**F-92402 COURBEVOIE CEDEX (FR)**

(54) **Radar secondaire apte à séparer toutes réponses indépendantes.**

(57)   La présente invention concerne un radar secondaire apte à séparer toutes réponses provenant d'avions différents.

Lorsque plusieurs avions envoient au radar secondaire classique des réponses simultanées dont les bits interfèrent, les traitements conventionnels ne permettent pas de séparer ces réponses, et il est alors impossible de procéder à l'identification et à la localisation des avions.

L'objet de l'invention est un radar secondaire muni, dans sa chaîne de réception effectuant de manière classique une démodulation cohérente et une numérisation des signaux X(t) reçus, d'un dispositif d'analyse en composantes indépendantes. Ce dispositif effectue tout d'abord un traitement d'orthonormalisation (1) des signaux numérisés reçus, puis un traitement de rotation (5) permettant de retrouver les signaux indépendants, et d'identifier par la suite les avions émetteurs.

Les deux traitements permettent également au radar secondaire d'assurer sa fonction de localisation des avions.

FIG. 1

EP 0 521 750 A1

La présente invention concerne un radar secondaire utilisé pour l'aide à la navigation aérienne, et capable de séparer les réponses d'avions munis de transpondeur et légèrement décalés en distance et en angle.

Rappelons qu'un radar secondaire est un dispositif émetteur composé d'une ou de plusieurs antennes, émettant des messages d'interrogations, par exemple des paires d'impulsions, suivant un diagramme de rayonnement ($\Sigma$) présentant un lobe principal directif entouré de lobes secondaires. Ces messages d'interrogation sont destinés à des avions équipés d'un matériel de réponse adéquat, appelé transpondeur, qui permet d'émettre des messages de réponse sous forme de codes. Pour éviter qu'un transpondeur ne réponde aux impulsions émises par les lobes secondaires du diagramme ($\Sigma$), l'antenne du radar secondaire possède généralement un autre diagramme de rayonnement ($\Omega$) qui recouvre complètement ces lobes secondaires et selon lequel le radar intercale d'autres impulsions. Ainsi, seuls les avions situés dans la zone de couverture du lobe principal sont amenés à répondre aux interrogations du radar.

Le traitement effectué à la réception a pour but d'extraire les informations contenues dans les messages réponses et de localiser les avions en distance et en direction d'arrivée. Pour affiner ce traitement, le radar secondaire possède généralement un troisième diagramme ($\Delta$) complémentaire du diagramme ($\Sigma$), l'exploitation des deux diagrammes ($\Delta$) et ($\Sigma$) fournissant alors l'information écartométrique. Le radar secondaire fonctionne correctement lorsque les messages de réponse arrivent séparément, c'est-à-dire lorsque les avions situés dans la zone d'interrogation sont espacés en distance d'un écart supérieur à la durée du premier message reçu. Si les messages de réponse arrivent simultanément sans que les bits de ces messages n'interfèrent, les méthodes de traitement conventionnelles sont encore satisfaisantes pour séparer ces messages. Par contre, si les bits de ces messages interfèrent, on perd généralement l'information écartométrique ainsi que les codes euxmêmes. Il est alors impossible de procéder à l'identification et à la localisation des avions. Or, cette situation peut être rencontrée fréquemment dans la pratique dans le cas de croisements de pistes, ou d'approche parallèle au voisinage d'aéroports.

La présente invention concerne un radar secondaire qui permet de résoudre le problème exposé précédemment en mettant en oeuvre une méthode d'analyse en composantes indépendantes.

On entend par analyse en composantes indépendantes tout procédé de traitement qui permet la séparation de signaux élémentaires indépendants émis par des sources différentes à partir de l'observation de combinaisons linéaires de ces signaux, et de l'exploitation des moments d'ordre supérieur à deux.

Plusieurs méthodes d'analyse ont été proposées, notamment par COMON, CARDOSO et GAETA-LACOUME, et peuvent être utilisées dans l'invention.

Plus précisément, l'invention concerne un radar secondaire comportant une chaîne de réception disposant d'au moins deux voies de réception, de moyens de démodulation cohérente produisant sur chacune des voies des signaux en phase et en quadrature qui forment une combinaison linéaire de messages indépendants effectivement envoyés au radar suivant une matrice de mélange, et d'un convertisseur analogique-numérique pour numériser ces signaux, le radar secondaire étant caractérisé en ce qu'il comporte des moyens pour déterminer ladite matrice de mélange et en déduire lesdits messages.

L'invention, ainsi que ses avantages, seront mieux compris au vu de la description suivante, en référence aux figures annexées :

- La figure 1 est un schéma bloc du principe de fonctionnement d'un radar secondaire selon l'invention.
- La figure 2 montre le schéma bloc de la chaîne de réception d'un radar secondaire mettant en oeuvre le calcul de la matrice de mélange A, selon la méthode d'analyse de COMON ;
- Les figures 3a à 3c illustrent le résultat obtenu par le radar secondaire de l'invention pour la réception de deux messages dont les bits interfèrent.

Il convient, dans un premier temps, de poser le problème sous forme mathématique :

Notons S(t), le vecteur de dimension P des signaux indépendants émis par des avions différents en réponse à un radar secondaire comprenant N voies de réception, et X(t), le vecteur de dimension N des signaux effectivement observés par ce radar secondaire. Il existe une combinaison linéaire entre ces deux vecteurs qui peut s'écrire

$$X(t) = A S(t) + B(t)$$

où A est une matrice de dimension (N,P) que l'on appellera matrice de mélange, et B(t) un vecteur de dimension N représentatif du bruit sur les voies de réception.

Il convient de préciser que les grandeurs A, B et S ainsi que toutes les autres intervenant dans la suite, sont à priori complexes au sens mathématique du terme puisque le radar secondaire dispose d'un organe de démodulation cohérente qui fournit des signaux en phase et en quadrature sur chaque voie de réception.

Le problème qui se pose, c'est-à-dire celui de retrouver toutes les composantes du vecteur S(t) au terme de bruit près, revient alors à trouver la matrice A telle que les composantes du vecteur $S(t) = A^{-1} [X(t) - B(t)]$ soient indépendantes.

Pour déterminer A, on s'appuie sur une décomposition du type

$$A = LU \quad (2)$$

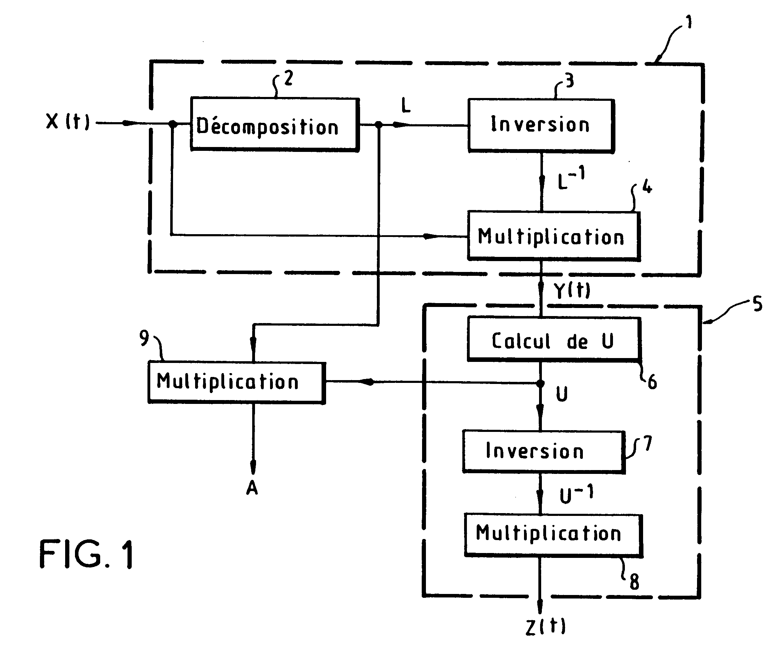

où U est une matrice unitaire, et L, est une matrice dont la nature dépend de la méthode d'analyse choisie : selon la méthode de COMON, cette matrice est triangulaire inférieure, alors que selon la méthode de GAETA-LACOUME, la matrice L est hermitienne. Quelle que soit la méthode d'analyse choisie, le nouveau problème posé est la détermination des matrices L et U. La figure 1 représente les étapes à effectuer pour déterminer ces deux matrices ; la première étape référencée 1 est une étape de blanchiement des données ou encore d'orthonormalisation du vecteur $Y = L^{-1} X$. En remplaçant par les équations (1) et (2), nous pouvons écrire

$$
\begin{aligned}
Y(t) &= L^{-1}[AS(t) + B(t)] \\
&= L^{-1}[LUS(t) + B(t)] \\
&= US(t) + L^{-1}B(t) \quad (3)
\end{aligned}
$$

Cette relation (3) montre que le vecteur $Y(t)$ est formé d'une partie utile $US(t)$ contenant les signaux recherchés, et d'une partie $L^{-1}B(t)$ contenant les termes de bruit.

L'étape d'orthonormalisation 1 a pour rôle de rendre les composantes du vecteur $Y(t)$ orthonormées de façon à ce que l'espérance mathématique de $Y(t)$ vérifie l'équation
$$E[YY^+] = I (N)$$
où $I(N)$ est la matrice identité d'ordre N.

Pour cela, on effectue une décomposition 2 qui dépend de la méthode d'analyse choisie. Il peut s'agir par exemple d'une décomposition de CHOLESKY qui utilise la matrice de corrélation $E(XX^+)$, ou d'une diagonalisation. Dans tous les cas, cette décomposition 2 permet d'obtenir la matrice L. Le vecteur $Y(t)$ est alors obtenu en effectuant successivement une inversion 3 de la matrice L, puis une multiplication 4 du vecteur $X(t)$ des signaux observés par la matrice inverse $L^{-1}$.

Une seconde étape 5 que nous appellerons étape de rotation, est alors nécessaire pour déterminer, à partir du vecteur $Y(t)$, la matrice U et par suite un vecteur $Z(t)$ tel que
$$Z(t) = U^{-1} Y(t)$$
et dont les composantes sont les plus indépendantes possible selon un critère qui, là encore, dépend de la méthode d'analyse choisie ; dans la méthode proposée par COMON, ce critère est la maximisation d'une fonction de contraste définie à partir des cumulants du vecteur $Y(t)$.

Cette seconde étape 5 comprend tout d'abord le calcul 6 de U par l'exploitation des moments, ou encore des cumulants selon COMON, d'ordre supérieur à 2 du vecteur $Y(t)$ puis l'inversion 7 de la matrice U dont le résultat, appliqué au vecteur $Y(t)$ par la multiplication 8, permet d'obtenir le vecteur $Z(t)$ qui se rapproche le mieux du vecteur $S(t)$ recherché. Une multiplication 9 directe des matrices L et U permet d'obtenir la matrice de mélange A. De façon générale, les étapes d'orthonormalisation 1 et de rotation 5 permettent d'obtenir une matrice A' égale à la matrice A, à une matrice diagonale près qui représente l'indétermination sur la phase des signaux identifiés. De plus, les signaux $Z(t)$ sont les signaux d'origine à une permutation près.

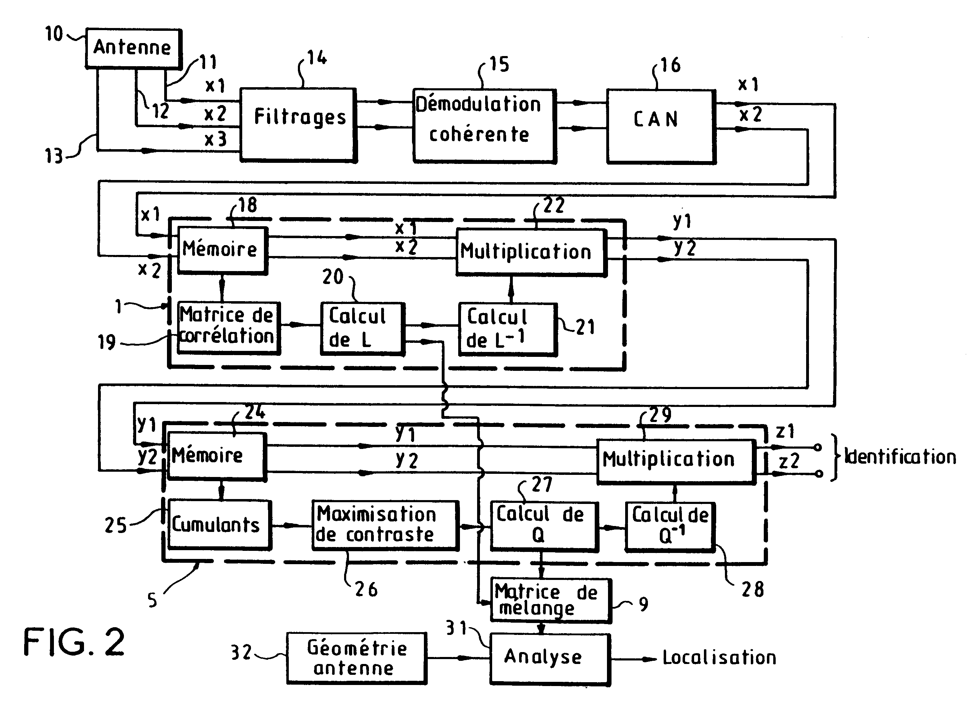

La figure 2 est un schéma bloc de la chaîne de réception d'un radar secondaire comportant trois voies de réception dont deux servent à la mise en oeuvre du calcul de la matrice de mélange A selon l'invention, suivant la méthode, non limitative, de COMON.

La chaîne de réception comporte classiquement une antenne de réception 10 disposant d'une voie somme (Σ) 11, d'une voie différence (Δ) 12 et d'une voie (Ω) 13, cette dernière voie recevant un signal $x_3$ qui n'est pas utilisé par la présente invention. Les signaux $x_1$, $x_2$ reçus respectivement sur les voies (Σ), (Δ) sont alors filtrés par des moyens de filtrage 14, démodulés de façon cohérente par des moyens de démodulation 15 de façon à obtenir les informations d'amplitude et de phase, puis numérisés par un convertisseur analogique-numérique 16 à une cadence compatible avec la largeur de bande des signaux reçus. A la sortie du convertisseur 16, les signaux numérisés $x_1$ et $x_2$ vont faire l'objet de l'analyse en composantes indépendantes par des moyens 1, 5 et 9 permettant de déterminer la matrice de mélange. Le vecteur X des signaux effectivement observés par le radar secondaire s'écrit donc

$$
X = \begin{pmatrix} x_1 \\ x_2 \end{pmatrix}
$$

Il est fourni à des moyens d'orthonormalisation 1 effectuant le traitement d'orthonormalisation. On peut par exemple traiter les données par blocs de K données successives en conservant K valeurs du vecteur X dans une mémoire 18 pendant l'étape d'orthonormalisation. Chaque bloc de données X est communiqué à des moyens 19 qui calculent, dans le cas d'une décomposition de CHOLESKY, la matrice de corrélation $E (XX^+)$. Comme nous l'avons dit précédemment, la connaissance de $E (XX^+)$ permet à un dispositif 20 de calculer L. Un dispositif d'inversion de matrice 21 permet alors d'obtenir la matrice inverse $L^{-1}$ nécessaire à l'obtention du vecteur Y dont les composants $y_1$ et $y_2$ sont orthonormales, ceci par la multiplication du vecteur X par la matrice $L^{-1}$ effectuée par le dispositif de multiplication 22.

Le vecteur Y est alors fourni à des moyens 5 effectuant le traitement de rotation. Comme précédemment, les données peuvent être traitées par bloc en étant stockées dans une mémoire 24. Ces données sont fournies à un dispositif 25 qui se charge de calculer les 16 cumulants d'ordre 4. Un dispositif 26 de maximisation de contraste est ensuite utilisé pour obtenir par la suite, la matrice U optimale. Les cumulants sont alors fournis à un dispositif 27 de calcul des coefficients de la matrice U. Un dispositif d'inversion de matrice 28 permet alors d'obtenir la matrice inverse $U^{-1}$ nécessaire à l'obtention du vecteur Z de composantes $z_1$ et $z_2$, par multiplication du vecteur Y par la matrice $Q^{-1}$ effectuée par un dispositif de multiplication 29. Notons qu'il est possible d'utiliser le même dispositif d'inversion de matrice 21 ou 28 et le même dispositif de multiplication 22 ou 29 dans un unique module pour obtenir, d'une part, le vecteur Y et, d'autre part, le vecteur Z.

Comme nous l'avons expliqué précédemment, les composants $z_1$ et $z_2$ du vecteur Z sont le plus indépendantes possible et représentent les messages émis par deux avions différents et destinés au radar secondaire. A partir de l'obtention de ces deux messages $z_1$ et $z_2$, le radar secondaire peut donc, de manière classique, extraire les informations de ces messages dans le but d'identifier les avions. La seconde fonction du radar, qui est de localiser ces avions en distance et en direction d'arrivée, ne peut être faite de manière classique puisque nous ne disposons plus des deux voies ($\Sigma$) et ($\Delta$) pour fournir l'information écartométrique. L'invention prévoit donc un autre traitement pour l'obtention de ces informations, à partir de l'analyse de la matrice de mélange. Comme nous le voyons sur la figure 2, cette matrice de mélange est obtenue par simple multiplication, au moyen d'un dispositif 9, de la matrice U, issue du dispositif 27, par la matrice L issue du dispositif 20. Des moyens d'analyse 31 de cette matrice de mélange identifiée à partir d'un modèle de propagation et de diagrammes d'antennes fourni par une bibliothèque 32, permettent d'identifier des paramètres comme la puissance et la direction d'arrivée des messages, assurant ainsi la fonction de localisation des avions.

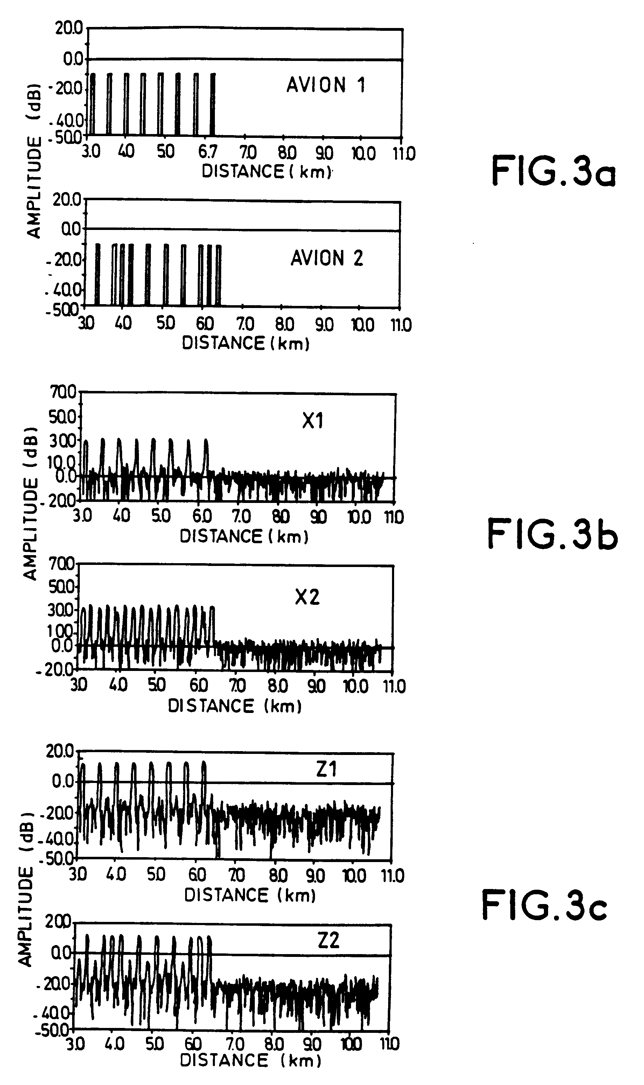

La figure 3 justifie l'intérêt du radar secondaire de l'invention dans une situation de "Garbling", c'est-à-dire dans le cas où le radar secondaire reçoit deux messages indépendants qui interfèrent bits à bits : plus précisément, la figure 3a représente deux messages de réponse envoyés par deux avions différents. Nous pouvons voir clairement sur cette figure que de nombreux bits du message de l'avion 2 interfèrent avec les bits du message de l'avion 1. La figure 3b montre ce que reçoit un radar secondaire classique sur ces voies ($\Sigma$) et ($\Delta$) après numérisation, c'est-à-dire, pour se référer à la figure 2, les signaux $x_1$ et $x_2$ issus du convertisseur 16. Il est clair qu'aucune exploitation de ces signaux n'est possible pour obtenir l'identification des avions et leur localisation. La figure 3c représente les signaux $z_1$ et $z_2$ sont tout à fait représentatifs des signaux effectivement envoyés par les avions (voir figure 3a) et peuvent être de ce fait exploités.

**Revendications**

1. Radar secondaire comportant une chaîne de réception disposant d'au moins deux voies de réception (11, 12), de moyens de démodulation cohérente (15) produisant sur chacune des voies (11, 12) des signaux en phase et en quadrature qui forment une combinaison linéaire de messages indépendants effectivement envoyés au radar suivant une matrice de mélange, et d'un convertisseur analogique-numérique (16) pour numériser ces signaux, le radar secondaire étant caractérisé en ce qu'il comporte des moyens (1, 5, 9) pour déterminer ladite matrice de mélange et en déduire lesdits messages.

2. Radar secondaire selon la revendication 1, caractérisé en ce qu'il comporte, en outre, des moyens (31, 32) pour localiser, à partir de la matrice de mélange, les avions émetteurs desdits messages.

3. Radar secondaire selon l'une quelconque des revendications précédentes, caractérisé en ce que la matrice de mélange est décomposable en un produit de deux matrices L et U, et que lesdits moyens (1, 5, 9) pour déterminer la matrice de mélange sont constitués :
   - de moyens (1) d'orthonormalisation du vecteur formé par lesdits signaux numérisés permettant de calculer la matrice L ;
   - de moyens (5) de rotation du vecteur orthonormé pour obtenir des composantes les plus indépendantes possible et calculer la matrice U ;
   - d'un dispositif (9) de multiplication des matrices L et U.

4. Radar secondaire selon la revendication 3, caractérisé en ce que les moyens (1) d'orthonormalisation comprennent :
   - une mémoire (18) pour mémoriser une pluralité de valeurs desdits signaux numérisés ;
   - des moyens (19) de calcul de la matrice de corrélation à partir desdites valeurs ;
   - d'un dispositif (20) de calcul de la matrice L ;
   - d'un dispositif d'inversion de matrice (21) pour obtenir la matrice $L^{-1}$ ;
   - d'un dispositif de multiplication (22) des signaux numérisés par la matrice $L^{-1}$ pour obtenir le vecteur orthonormé.

5. Radar secondaire selon la revendication 3, caractérisé en ce que les moyens (5) de rotation du vecteur orthonormé comprennent :
   - une mémoire (24) ;
   - un dispositif (25) de calcul de cumulants d'ordre supérieur à 2 ;

- un dispositif (26) de maximisation de contraste ;

- un dispositif (27) de calcul des coefficients de la matrice U ;

- un dispositif d'inversion de matrice (28) pour obtenir la matrice $U^{-1}$ ;

- un dispositif de multiplication (29) du vecteur orthonormé par la matrice $U^{-1}$ pour obtenir un vecteur de composantes sensiblement indépendantes.

6. Radar secondaire selon la revendication 2, caractérisé en ce que lesdits moyens comportent :

- une bibliothèque (32) contenant un modèle de propagation et une pluralité de diagrammes d'antennes ;

- des moyens d'analyse (31) pour localiser, à partir de la matrice de mélange et des données de la bibliothèque (32), les avions émetteurs.

EP 0 521 750 A1

X (t) → Décomposition (2) → L → Inversion (3)

L⁻¹

Multiplication (4)

Y(t)

Calcul de U (5) (6)

Multiplication (9) ← U

A

Inversion (7)

U⁻¹

Multiplication (8)

Z(t)

FIG. 1

$L^{-1}$ $U^{-1}$

FIG. 2

EP 0 521 750 A1

FIG.3a

FIG.3b

FIG.3c

**Office européen des brevets**

# RAPPORT DE RECHERCHE EUROPEENNE

Numero de la demande

EP 92 40 1706

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 743 910 (HILL ET AL.)<br>* colonne 3, ligne 10 – ligne 44 *<br>* colonne 6, ligne 50 – colonne 7, ligne 22; figure 2 *<br>--- | 1 | G01S13/78 |
| A | US-A-4 910 521 (MELLON)<br>* abrégé; figure 2 *<br>--- | 1 | |
| A | EP-A-0 055 636 (LMT RADIO PROFESSIONNELLE)<br>* revendication 1; figure *<br>----- | 1 | |
| | | | **DOMAINES TECHNIQUES RECHERCHES (Int. Cl.5)** |
| | | | G01S |

Le présent rapport a été établi pour toutes les revendications

| Lieu de la recherche | Date d'achèvement de la recherche | Examinateur |
|---|---|---|
| LA HAYE | 05 OCTOBRE 1992 | S J LAMBLEY |

EPO FORM 1503 03.82 (P0402)